# EUROPÄISCHE PATENTSCHRIFT

(11) **EP 2 200 802 B1**
(45) Veröffentlichungstag und Bekanntmachung des Hinweises auf die Patenterteilung: **11.06.2014**
(21) Anmeldenummer: 08838865.7
(22) Anmeldetag: 16.10.2008
(51) Int. Cl.: B29C 45/82, B29C 45/50

(54) **VERFAHREN UND VORRICHTUNG ZUM STEUERN EINER LINEAR BEWEGTEN AXE**
METHOD AND DEVICE FOR CONTROLLING A LINEAR MOTION AXIS
PROCÉDÉ ET DISPOSITIF DE COMMANDE D'UN AXE DÉPLACÉ LINÉAIREMENT

(30) Priorität: 19.10.2007 CH 16372007
(43) Veröffentlichungstag der Anmeldung: 30.06.2010
(73) Patentinhaber: Netstal-Maschinen AG, 8752 Näfels (CH)
(72) Erfinder: NOTZ, Markus, CH-8762 Schwändi (CH)
(74) Vertreter: Wilhelm, Ludwig
(86) Internationale Anmeldenummer: PCT/EP2008/063989
(87) Internationale Veröffentlichungsnummer: WO 2009/050246

(56) Entgegenhaltungen:
- US-A- 5 443 782
- US-A- 5 513 971

## Beschreibung

### Technisches Gebiet

Die Erfindung betrifft ein Verfahren zum Steuern verschiedener Prozessphasen von linear bewegten Achsen, insbesondere der Einspritzschnecke oder des Schmelzekolbens bei einer Spritzgiessmaschine mit einem hydraulisch linear angetriebenen Kolben mit einer Kolbenkammer sowie einer Stangenkammer, ferner eine Vorrichtung zum Steuern einer linear bewegten Achse, insbesondere der Einspritzschnecke oder des Schmelzekolbens einer Spritzgiessmaschine mit einem hydraulisch linear antreibbaren Kolben mit einer Kolbenkammer sowie einer Stangenkammer.

### Stand der Technik

Alle Betriebsphasen eines Spritzzyklus werden heute bei hydraulischen Spritzgiessmaschinen mit digitaler Regeltechnik und bei vollelektrischen Spritzgiessmaschinen mittels Servomotoren und entsprechender Steuer- / Regeleinrichtungen mit höchsten Qualitätsstandards sichergestellt. Dies schliesst bei elektrischen Maschinen mit ein, dass auch aktive Bremsvorgänge voll unter Kontrolle gehalten werden können.

Die jüngste Entwicklung hat gezeigt, dass voll elektrische Maschinen im Vergleich zu hydraulischen Maschinen wesentlich energieoptimaler betrieben werden können. Im Falle eines hydraulischen Antriebes mit Ventilregelung wird ein grosser Anteil der Energie durch Drosselvorgänge im Bereich der Kanten der Ventilkolben irreversibel vernichtet. Aus maschinenbaulicher Sicht erlauben hydraulische Antriebe durch beliebige Leitungsführungen einfachere Konzepte als elektrische Antriebe. Der Anordnung von elektrischen Motoren mit den erforderlichen Übertrieben sind Grenzen gesetzt, sodass oft bauliche Kompromisse mit entsprechenden Mehraufwendungen notwendig sind. Nach einer gängigen Faustregel ist eine vollelektrische Spritzgiessmaschine insgesamt etwa 20% teurer als eine hydraulisch angetriebene Spritzgiessmaschine. Die Energieeinsparung bei elektrisch angetriebenen Maschinen kann besonders auch durch Rekuperierung der Bremsenergie 20% - 30% betragen. Aus diesen Gegebenheiten besteht ein grundsätzliches Anliegen, hydraulische Lösungen auf das Ziel einer energieoptimalen Ansteuerung, vor allem der Linearbewegung der Einspritzschnecke, zu verbessern.

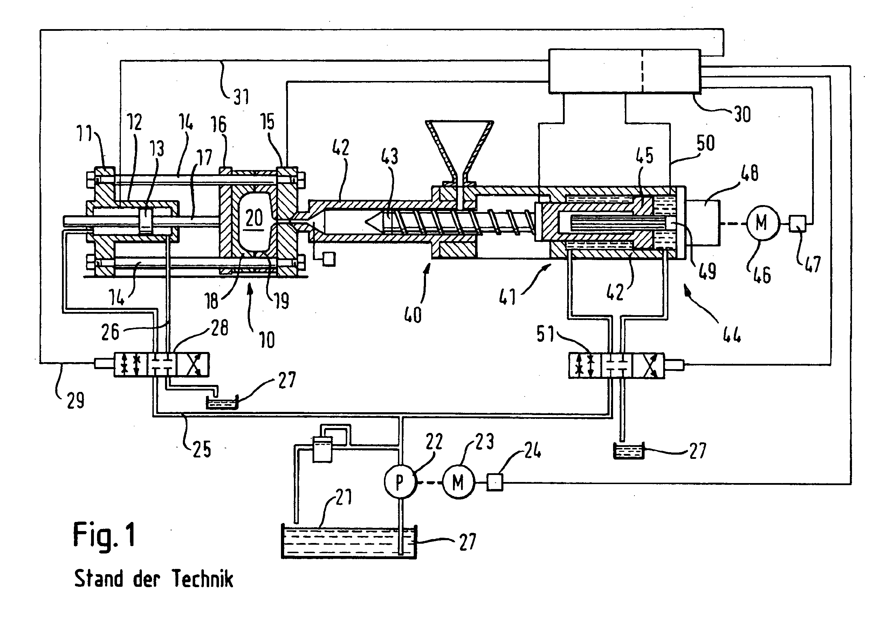

Die US 2003 / 0090018 zeigt eine Lösung des Standes der Technik für einen hydraulischen Antrieb. Es wird dazu auf die Figur 1 Bezug genommen (entspricht Figur 1A der genannten US-Patentpublikation). Diese Figur gibt einen schematischen Überblick der Lösung. Auf der linken Bildhälfte sind die beiden Formhälften mit dem Formschluss, auf der rechten Bildhälfte ist das Einspritzaggregat mit einem hydraulischen Linearantrieb für die Einspritzschnecke dargestellt. Beide Ölkreisläufe werden über eine Pumpe gespiesen. Das Drucköl wird über je ein Regelventil der jeweiligen Kolbenkammer bzw. Stangenkammer zu- und abgeführt, dies in Abhängigkeit zur jeweiligen Prozessphase. Der eingangs erwähnte Energievergleich zwischen elektrischem und hydraulischem Antrieb gilt für diese Lösung.

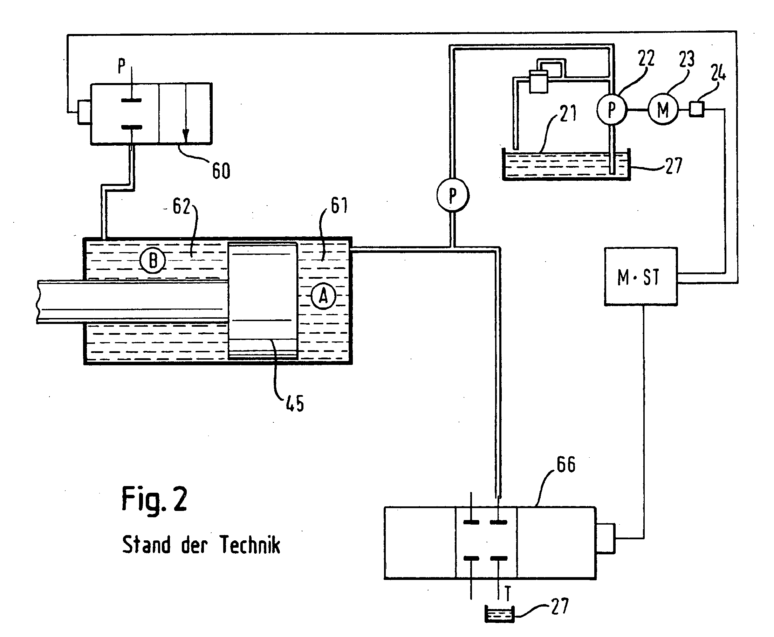

Die Figur 2 zeigt eine verbesserte Lösung des Standes der Technik, wie sie von der Anmelderin mit gutem Erfolg gebaut wird. Der wesentliche Unterschied zu älteren Lösungen liegt darin, dass hier für die Prozessphase "Schneckenrückzug" ein einfaches Schnellschaltventil zugeschaltet werden kann. Dies bringt bereits eine wesentliche Verbesserung im Hinblick auf die Energieoptimierung.

In der US 5,443,782 ist ein Verfahren zum Steuern einer Spritzgießmaschine beschrieben, bei der mit drei reinen Schaltventilen sowie einer verstellbaren Pumpe gearbeitet wird.

Die US 5,513,971 offenbart einen hydraulischen Regelkreis für eine Spritzgießmaschine, bei der zwei Servoventile verwendet sind.

US-A-5 513 971 offenbart ein Verfahren gemäß dem Oberbegriff des Anspruch 1 und eine Vorrichtung gemäß dem Oberbegriff des Anspruchs 14.

Ein wesentlicher Nachteil aller hydraulischen Lösungen des Standes der Technik liegt überdies darin, dass bei den Phasenübergängen, besonders in Bezug auf die Einspritzschnecke, hydraulische Stösse entstehen können.

### Darstellung der Erfindung

Der neuen Erfindung wurde in Bezug auf die Optimierung eines hydraulischen Antriebes die folgende Aufgabe gestellt:
- Es soll eine bestmögliche Energieoptimierung mit einem hydraulischen Antrieb erreicht werden.
- Es soll mittels Positionsregelung eine Ansteuerung der Kolbenkammer (A) sowie der Stangenkammer (B) ermöglicht werden.
- Insbesondere sollen alle Übergänge der verschiedenen Phasen im Rahmen eines ganzen Spritzzyklus möglichst stossfrei erfolgen.

Das erfindungsgemässe Verfahren ist dadurch gekennzeichnet, dass der angetriebene Kolben über zwei parallel sowie einzeln schaltbare und kombinierbare Proportionalventile, ein Spritzventil sowie ein Dosierventil, gesteuert / geregelt wird, wobei während der Dosierphase mittels speziellem Konstruktivem Aufbau eine Verbindung der beiden Kammern (A) (61) und B (62) hergestellt wird.

Die erfindungsgemässe Vorrichtung ist dadurch gekennzeichnet, dass die Vorrichtung zum Steuern der verschiedenen Prozessphasen, insbesondere der Einspritzschnecke, zwei einzeln sowie parallel steuerbare Proportionalventile, ein Spritzventil sowie ein Dosierventil, aufweist, wobei während der Dosierphase mittels speziellem Konstruktivem Aufbau eine Verbindung der beiden Kammern (A) (61) und (B) (62) herstellbar ist.

Ausgehend von der Tatsache:
a) dass der Hydraulikzylinder auch für aktive Bremsvorgänge eine wirksame und genügend grosse Fläche auf der Seite der Stangenkammer (B) anbietet und
b) die Stangenkammer (B) dabei eine wirksame Fläche von 20% bis 40% der Kolbenseite (A) hat,
geht die neue Erfindung mit der Kombination von zwei Proportionalventilen von den folgenden Erkenntnissen aus:
c) Es soll nicht durch blosses Ablassen von Hochdrucköl über Ventilkanten wertvolle Energie vernichtet werden.
d) Bei der Positionierregelung des Kolbens soll ein Kraftgleichgewicht eingestellt werden können, sodass sich der Kammerdruck (B) im Verhältnis der Kolbenflächen (A) auf einem höheren Niveau einpendeln kann.
e) Während dem Dosiervorgang erzeugt die Fortschrittsbewegung der Schnecke infolge Drehung mit der Schmelzeförderung sowie dem Einzug einen Staudruck.
f) Beim Schneckenrückzug und beim Einspritzen ist es von Vorteil, wenn die Positionsregelung mit einem gleitenden Sollwert (Geschwindigkeitsregelung / Positionsmessung) gefahren werden kann.
g) Durch aktives Kontrollieren auf beiden Seiten der Kolbenflächen können sowohl Beschleunigungs- wie auch Bremsvorgänge in beiden Richtungen auf einem Höchstmass beherrscht werden. Dadurch sind auch die einzelnen Prozessphasen über eine Positionsregelung beherrschbar, und es werden stossfreie Phasenübergänge ermöglicht.
h) Die Nachdruckregelung wird bevorzugt mit je einem Druckaufnehmer in den Kammern A und B ausgeführt.

Insbesondere auch aufgrund von besonders vorteilhaften Ausgestaltungen erlaubt die neue Erfindung,
- jeden Phasenübergang nahezu stossfrei auszubilden,
- die Staudruckregelung ohne Druckölverbrauch durchzuführen, womit Energie gespart werden kann,
- die digitale Steuerung der zwei parallelen Proportionalventile und unter Gewährleistung der Verfahrensparameter den Energieverbrauch zu optimieren,
- alle Phasenübergänge positionsgesteuert / -geregelt zu kontrollieren.

Die neue Erfindung gestattet eine ganze Anzahl besonders vorteilhafter Ausgestaltungen. Es wird dazu auf die Ansprüche 2 bis 13 sowie 15 bis 20 Bezug genommen.

Die Steuerung / Regelung, insbesondere auch bei den Phasenübergängen, kann mit dem hydraulischen Antrieb wie mit den bekannten Antriebslösungen durchgeführt werden, sodass im Endeffekt auch in Bezug auf einen hydraulischen Linearantrieb eine entsprechend optimale Beherrschung des ganzen Spritzvorganges möglich wird. Dies aber bedeutet, dass zumindest in Bezug auf den linearen Schneckenantrieb eine Gleichwertigkeit zu einem elektrischen Antrieb möglich wird, jedoch mit den Vorteilen einer hydraulischen Lösung. Die neue Erfindung kann auch auf der Seite des Formschlusses bei ganz grossen Leistungen mit dem Einsatz von zwei grossen parallelen Proportionalventilen Vorteile bringen. Wie in der Folge gezeigt wird, kommen die Vorteile jedoch ganz besonders bei den Prozessphasen mit grossem Energieverbrauch einer Einspritzschnecke bzw. eines Einspritzkolbens zum Tragen.

Ganz besonders bevorzugt werden zur Leistungserhöhung, mindestens einer Prozessphase, die beiden Proportionalventile parallel geschaltet. Die beiden Proportionalventile können im Verlaufe jedes Spritzzyklus auf verschiedene Arten kombiniert bzw. eingesetzt werden. Vorteilhafterweise werden während der Einspritzphase beide Ventile gleichzeitig angesteuert, wobei bei grosser Leistung beide Proportionalventile zur Verdoppelung der Leistung parallel geschaltet und bei kleinerer Leistung die zwei Proportionalventile unterschiedlich angesteuert werden. Bevorzugt wird die Einspritzbewegung primär mit dem Spritzventil gefahren und der Fluss P zu A von dem Dosierventil unterstützt.

Neben der Tatsache der Verwendung von zwei Proportionalventilen von der selben Baugrösse ist die spezifisch angepasste Kantengeometrie, insbesondere des Dosierventils, ein wesentlicher Grund für die ganz besonders vorteilhafte Wirkung der neuen Lösung. Die in Bezug auf den Energieverlust relevanten Ventilkanten der Ventilkolben, insbesondere des Dosierventils, werden für eine optimale Kontrolle bei kleinem Durchfluss von weniger als 15% der grössten Leistung konisch geschliffen.

Vorteilhafterweise werden aber auch die relevanten Kanten des Spritzventils mit einem Konus versehen. Bei dem Dosierventil kann der Kantenschliff an dem Ventilkolben über einen Millimeter in Kolbenlängsrichtung und bis zu einigen Zehntelmillimetern im Durchmesser betragen. Aus wirtschaftlichen Gründen können in beiden Fällen Proportionalventilgehäuse aus Standardserien verwendet werden, wobei die besondere Ausgestaltung eine spezielle Geometrie der Kolbenkanten erfordert.

Ferner wird vorgeschlagen, dass in der Phase Position der Einspritzsschnecke halten und / oder Schneckenrückzug nur das Spritzventil wirksam ist, wobei das Dosierventil geschlossen im Überdeckungsbereich bleibt.

Während der Dosierphase wird mittels speziellem konstruktivem Aufbau, insbesondere der Ventilkantengeometrie, mit dem Dosierventil eine Verbindung der beiden Kammern A und B und hergestellt. Dabei wird mit zunehmender Auslenkung des Dosierventils in dem Quadranten der Dosierregelung der Ölstrom aus beiden Zylinderkammern (A + B) zum Tank abgeleitet. Hier liegt einer der Hauptpunkte für die Energieeinsparung, welche erlauben, einen hydraulischen Antrieb ähnlich energiesparend zu betreiben wie einen elektrischen Antrieb.

Es wird ferner vorgeschlagen, dass der Antrieb der Einspritzschnecke in Dosierrichtung durch den Fortschrittsgrad der Einspritzschnecke infolge Drehung erzeugt wird, wobei die Regelung passiv durch Drosselung des Ölstroms zum Tank erfolgt und das Spritzventil bei diesem Vorgang mit seiner Überdeckung geschlossen bleibt. Zu der Kraft auf die Schnecke, verursacht durch den Granulateinzug sowie die Schneckendrehung, wird eine definierte Gegenkraft erzeugt durch einen kontrollierten Abfluss des Drucköles von der grossen Kammer (A) in die kleine Kammer (B), wobei gleichzeitig die Differenz der Kammervolumen kontrolliert in den Tank abgelassen wird.

Vorteilhafterweise wird mit einem asymmetrischen Schliff der Ventilkanten eine entsprechende Verbindung der beiden Kammern und für den Feinbereich herstellbar. Dazu werden zwischen dem Spritzventil sowie dem Dosierventil Verbindungsleitungen zu den Kammern A und B angeordnet, welche eine gleichzeitige Ölzufuhr und Ölabfuhr, sowohl der Kolbenkammer wie der Stangenkammer, erlauben.

Bevorzugt weist die Vorrichtung eine gemeinsame Pumpe und einen gemeinsamen Tank auf, wobei der Ölfluss bzw. der Öldruck der einzelnen Prozessphasen mittels der Steuerung der zwei Proportionalventile sowie je einem Drucksensor in der Kolbenkammer bzw. der Stangenkammer sicherstellbar ist. Die Vorrichtung weist ferner Mittel auf zur Steuerung / Regelung der Prozessphasen in digitaler Steuer- / Regeltechnik zur koordinierten und energieoptimalen Ansteuerung der zwei parallel angeordneten Proportionalventile.

Besonders bevorzugt werden die relevanten Kanten des Kolbens des Spritzventils unterschiedlich zu den relevanten Kanten des Dosierventils geschliffen, bzw. sie weisen je unterschiedliche Konen auf.

Ein grosser Vorteil liegt darin, dass zwei kleinere Ventile aus einer Massenfertigung billiger sein können als ein entsprechend viel grösseres Spezialventil. Ein nicht unwichtiger Punkt liegt ferner darin, dass während der Dosierphase mittels asymetrischem Schliff der Ventilkanten mit dem Dosierventil eine Verbindung der beiden Kammern A und B hergestellt wird. Mit dem asymmetrischen Schliff der Ventilkanten wird die energieoptimale Ansteuerung unterstützt. In der Phase der Dosierregelung wird mit zunehmender Auslenkung des Dosierventils in dem Quadranten der Dosierregelung der Ölstrom zum Tank abgeleitet. Damit reduziert sich der Energieverlust ganz besonders in dieser Phase. Die Phase der Druckregelung wird allein durch das Spritzventil sichergestellt. Bevorzugt wird dabei die Regelung im Feinbereich des Druckes im Überdeckungsbereich des Spritzventils durchgeführt.
- Die Figur 1: zeigt eine Lösung des Standes der Technik gemäss US 2003 / 0090018;
- die Figur 2: zeigt eine weitere Lösung des Standes der Technik, entsprechend der bisherigen Praxisausführung der Anmelderin;

### Kurze Beschreibung der Erfindung

Die neue Erfindung wird nun anhand einiger Ausführungsbeispiele mit weiteren Einzelheiten erläutert. Es zeigen:
- die Figur 3: die erfindungsgemässe Lösung mit zwei Proportionalventilen;
- die Figur 4: zeigt das Verhältnis des Ölstroms Q in Bezug auf die Schieberposition S des Spritzventils;
- die Figur 5: zeigt das Verhältnis des Ölstroms Q in Bezug auf die Schieberposition S des Dosierventils;
- die Figuren 6a und 6b: zeigen die spezielle konstruktive Ausgestaltung der Ventile "Einspritzen" (Figur 6a) und "Dosieren" (Figur 6b) auch in Bezug auf die Ventilkanten.

### Wege und Ausführungen der Erfindung

In der Folge wird auf die Figur 1 Bezug genommen. Diese zeigt eine bekannte Lösung des Standes der Technik gemäss US 2003 / 0090018. Auf der linken Bildseite ist der Formschluss 10, der eine Trägerplatte 11 sowie einen Formschlusszylinder 12 mit einem Antriebskolben 13 aufweist. Die Trägerplatte 11 ist über Holmen 14 mit der spritzseitigen feststehenden Werkzeugaufspannplatte 15 verbunden. Die bewegliche Werkzeugaufspannplatte 16 ist mit der Kolbenstange 17 verbunden. Auf den entsprechenden Werkzeugaufspannplatten 15, 16 ist je eine Formhälfte 18 resp. 19 angeordnet, welche zusammen einen Formhohlraum 20 bilden. Das hydraulische Druckmedium 21 wird über eine Pumpe 22, einen Antriebsmotor 23 mit Servoantrieb 24 über eine Druckleitung 25 auf die Kolbenrückseite gefördert. Über eine weitere Leitung 26 wird im Falle der Formschliessung das Druckmedium in den Tank 27 abgelassen. Die Vor- und Rückbewegung des Antriebskolbens 13 wird über ein Ventil 28 über eine entsprechende Steuereinrichtung 30 sowie eine Steuerleitung 29 sichergestellt. Der erforderliche Druck wird über einen Sensor und eine entsprechende Signalleitung 31 von der Steuereinrichtung 30 kontrolliert. Auf der rechten Bildseite ist das Spritzaggregat 40 mit einer Antriebsgruppe 41 dargestellt. Das Spritzaggregat 40 weist einen Spritzzylinder 42, eine Einspritzschnecke 43 sowie eine Antriebsgruppe 44 auf. Die Antriebsgruppe 44 besteht aus einem hydraulischen Antrieb mit Hydraulikkolben 45 für die Linearbewegung der Einspritzschnecke 43 sowie einem elektromotorischen Antrieb 48 mit Elektromotor 46 mit Servoantrieb 47 für die rotative Bewegung der Einspritzschnecke 43. Der Übertrieb von dem Elektromotor 46 zu dem Hydraulikkolben 45 erfolgt über eine Zahnwelle 49, welche in dem Hydraulikkolben 45 in Linearrichtung gleitend eingreift. Der erforderliche Druck für das Einspritzen wird über einen Sensor mit Signalleitung 50 ebenfalls von der Steuereinrichtung überwacht und mittels eines Ventils 51 geregelt. Der grosse Nachteil dieser Lösung liegt darin, dass insbesondere bei der Staudruckregelung zu viel Energie vernichtet wird und bei den Phasenübergängen Stösse entstehen.

Die Figur 2 zeigt eine weitere Lösung des Standes der Technik. Hier wird für den Schneckenrückzug ein zusätzliches einfaches Schnellschaltventil 60 eingesetzt. Der Druck P wird auf der Seite der Kolbenkammer (A) bzw. 61 analog geregelt wie bei der Lösung gemäss Figur 1. Der Druck auf der Seite der Stangenkammer (B) bzw. 62 wird zusätzlich gesteuert. Die Bewegung der Kolbenstange wird überwacht. Das Hauptventil ist ein Proportionalventil 66, über welches alle hydraulischen Bewegungen, inklusive Druckaufbau, gesteuert bzw. geregelt werden. Bei der dargestellten Lösung kann zwar der Energiebedarf optimiert, jedoch können die Stösse bei den Phasenübergängen nicht vermieden werden.

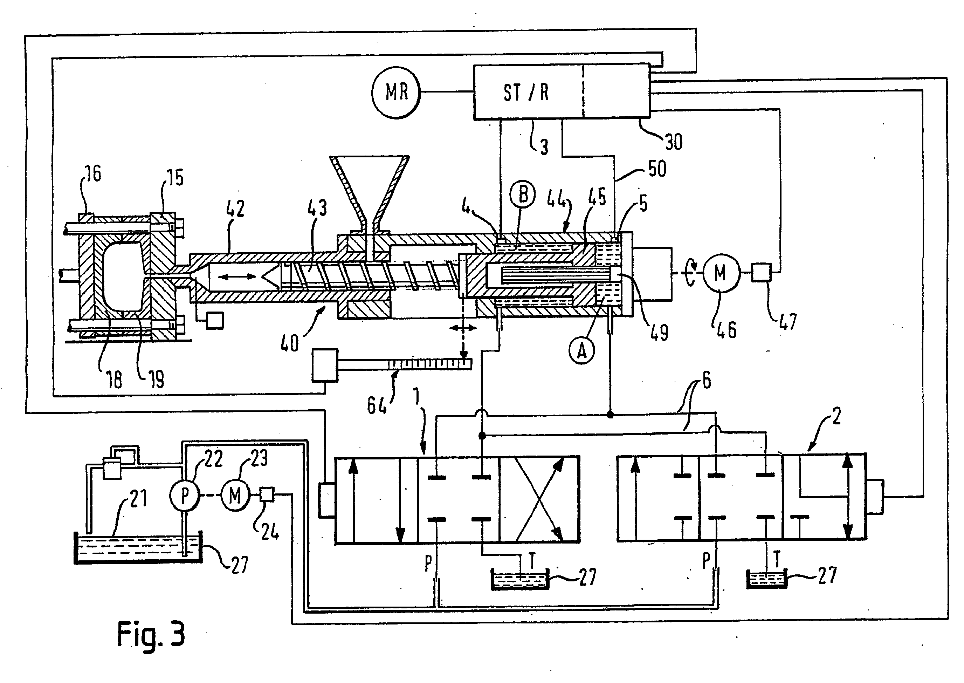

Die Figur 3 zeigt die erfindungsgemässe Lösung. Der Kerngedanke liegt darin, dass für die Steuerung / Regelung zwei spezielle Proportionalventile, ein Spritzventil 1 sowie ein Dosierventil 2, verwendet werden. Eine der Hauptaufgaben des Dosierventils 2 ist die Dosierregelung. Es weist dafür eine spezielle Kantengeometrie der Dosierventilkolben auf. Der zweite zentrale Gedanke liegt darin, dass nunmehr eine Vorrichtung zum Steuern 3 der verschiedenen Prozessphasen eingesetzt werden kann, entsprechend der Steuer- / Regeleinrichtung bei elektrischen Antrieben. Gemäss der neuen Erfindung können alle Prozessphasen mit digitaler Regel- / Steuertechnik kontrolliert werden. Dabei werden der ganze Ölfluss, der Druckaufbau, insbesondere die Phasenübergänge, mit Einschluss von Bremsvorgängen, in höchster Präzision beherrscht. Aufgrund der neuen Erfindung ist erkannt worden, dass dieser höchste Grad der Beherrschung aller Prozessphasen nur durch die Möglichkeit der koordinierten Steuerung / Regelung von zwei Proportionalventilen 1 und 2 erreichbar ist. Wie in den Ansprüchen 2 bis 13 sowie 15 bis 20 ausgeführt ist, werden die Ventile 1 und 2 parallel, teilweise unterstützend oder einzeln gesteuert und geregelt. Ein besonderer asymmetrischer Schliff der Ventilkanten unterstützt die Phasenübergänge sowie die Feinregelung des Hydraulikkolbens. Die neue Erfindung ermöglicht eine grosse Energieeinsparung sowie die Vermeidung von Hydraulikstössen. Anstelle eines grossen Spezialventils zur Erhöhung der Leistung sind die Materialkosten für zwei kleinere Ventile vergleichsweise bescheiden. Der Druck des Hydraulikmediums wird in beiden Kolbenkammem über Drucksensoren 4 bzw. 5 von der Steuervorrichtung 3 überwacht bzw. kontrolliert. Mit der Lösung durch eine spezielle Kantengeometrie kann im Dosiervorgang die Staudruckregelung als passives Ablassen des Ölstroms bezüglich des Energieverbrauches optimiert werden. Die Bewegung des Kolbens wird über eine Positionsmesseinrichtung 64 überwacht.

In der Figur 3 ist der Tank 27 als schematische Darstellung dreimal dargestellt. In der Praxis wird jedoch nur ein gemeinsamer Tank verwendet. Ueber Verbindungsleitungen 6 kann der Fluss des Hydraulikmediums sowohl zwischen den beiden Kammern A und B wie auch zum Tank geleitet werden.

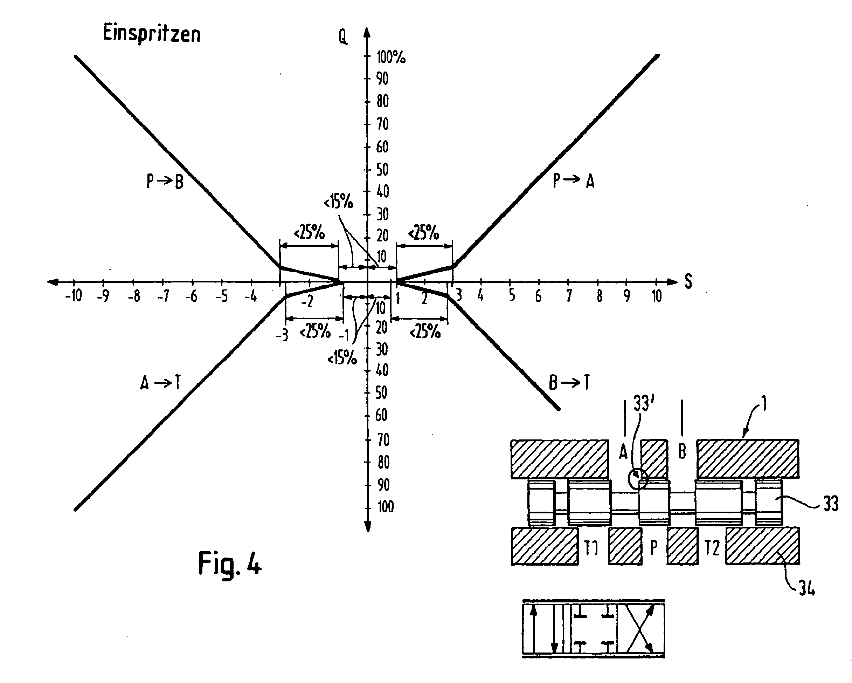

Die Figur 4 zeigt typische Ventilkennlinien für das Spritzventil. In der Senkrechten ist Die Figur 4 zeigt typische Ventilkennlinien für das Spritzventil. In der Senkrechten ist der Ölstrom Q, in der Horizontalen die entsprechende Schieberposition S dargestellt. Deutlich erkennbar sind die Phasenübergänge sowie die Feinbereiche kleiner 25% der maximalen Leistung. Rechts ist das dazugehörige Spritzventil figürlich und als Schema dargestellt.

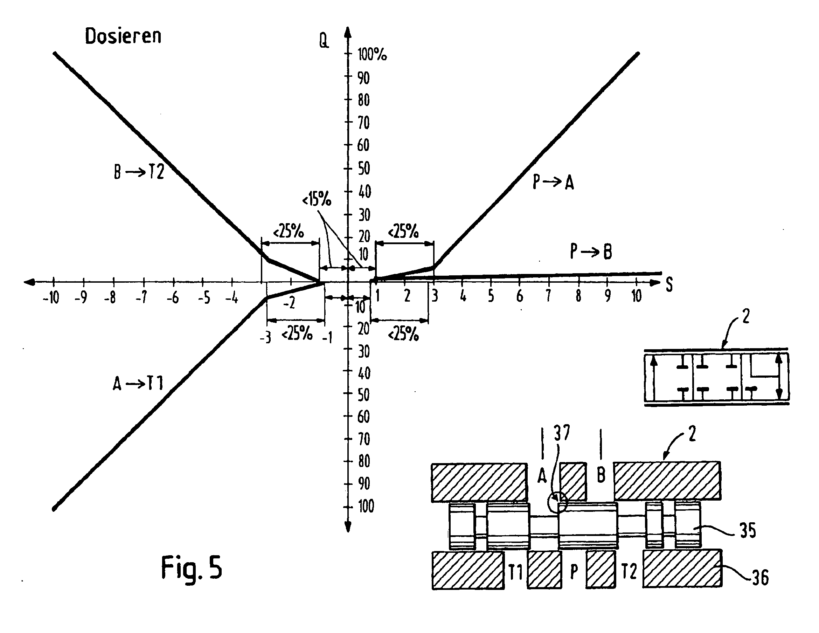

Die Figur 5 zeigt die entsprechenden Kennlinien für das Dosierventil, sinngemäss zur Figur 4.

Die neue Erfindung erlaubt, bei hydraulischen Antrieben eine ganze Anzahl Vorteile zu realisieren:
- Anstelle von einem grossen Spezialventil können zwei in der Nenngrösse reduzierte Standardventile eingebaut werden.
- Beim Dosieren ist keine Einspeisung von hochwertigem Drucköl in die Kammer B notwendig.
- Es ist eine kontrollierte Öl-Ablassregelung zum Halten eines Staudruckes möglich.
- Die Staudruckregelung wird durch den Fortschrittsgrad der Schneckendrehung erzeugt.
- Es kann bis zu 30% der aufgebrachten Leistung reduziert werden. Dies ist beachtlich, wenn man bedenkt, dass schon bei grösseren Maschinen d er Anmelderin 15 - 20 kW eingespart werden können.
- Die Feinreglung kann sowohl im Bereich kleiner 15% wie auch 25% der maximalen Leistung optimiert und Stösse vermieden werden.

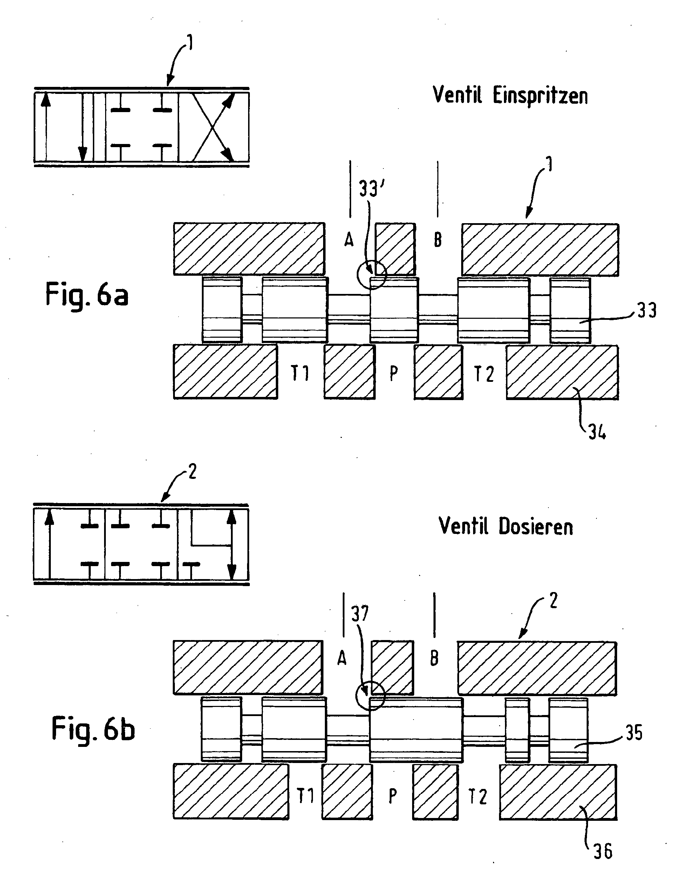

Die Figur 6a zeigt das Einspritzventil 1 mit der speziellen Ausgestaltung des Ventilkolbens 33, des Ventilgehäuses 34 sowie der Kolbenkanten. Die beiden Ventile "Einspritzen" 1 sowie "Dosieren" 2 sind je links oben rein schematisch und darunter figürlich dargestellt.

Die Figur 6b zeigt das Dosierventil 2 mit einem Ventilkolben 35, einem Ventilgehäuse 36 mit den, entsprechend der Funktion Dosieren spezifischen Kolbenkanten. Die Geometrie des Ventilkolbens 35 weicht stark ab von derjenigen eines Standardventils.

## Patentansprüche

1. Verfahren zum Steuern verschiedener Prozessphasen einer linear bewegten Achse der Einspritzschnecke (43) oder eines Schmelzekolbens bei einer Spritzgiessmaschine mit einem hydraulisch linear angetriebenen Kolben mit einer Kolbenkammer (A) sowie einer Stangenkammer (B)
**dadurch gekennzeichnet,**
**dass** der angetriebene Kolben (45) über zwei parallel sowie einzeln schaltbare und kombinierbare Proportionalventile, ein Spritzventil (1) sowie ein Dosierventil (2), gesteuert / geregelt wird, wobei während der Dosierphase mittels speziellem konstruktivem Aufbau mit dem Dosierventil (2) eine Verbindung der beiden Kammern (A) und (B) hergestellt wird.

2. Verfahren nach Anspruch 1,
**dadurch gekennzeichnet,**
**dass** während der Dosierphase mittels speziellem konstruktivem Aufbau der Ventilkantengeometrie, mit dem Dosierventil (2) eine Verbindung der beiden Kammern (A) und (B) hergestellt wird.

3. Verfahren nach einem der Ansprüche 1 oder 2,
**dadurch gekennzeichnet,**
**dass** mit zunehmender Auslenkung des Dosierventils (2) in dem Quadranten der Dosierregelung der Ölstrom aus beiden Zylinderkammern (A + B) zum Tank (27) abgeleitet wird.

4. Verfahren nach einem derAnsprüche 1 bis 3,
**dadurch gekennzeichnet,**
**dass** der Antrieb der Einspritzschnecke (43) in Dosierrichtung durch den Fortschrittsgrad der Einspritzschnecke (43) infolge Drehung erzeugt wird, wobei die Regelung passiv durch Drosselung des Ölstroms zum Tank (27) erfolgt und das Spritzventil (1) bei diesem Vorgang mit seiner Überdeckung geschlossen bleibt.

5. Verfahren nach einem der Ansprüche 1 bis 4,
**dadurch gekennzeichnet,**
**dass** zur Leistungserhöhung, mindestens einer Prozessphase, die beiden Proportionalventile (1, 2) parallel geschaltet werden.

6. Verfahren nach Anspruch 1,
**dadurch gekennzeichnet,**
**dass** während der Einspritzphase beide Ventile (1 und 2) gleichzeitig angesteuert werden, wobei bei grosser Leistung beide Proportionalventile (1 und 2) zur Verdoppelung der Leistung parallel geschaltet und bei kleinerer Leistung die zwei Proportionalventile (1 und 2) unterschiedlich angesteuert werden.

7. Verfahren nach Anspruch 6,
**dadurch gekennzeichnet,**
**dass** die Einspritzbewegung primär mit dem Spritzventil (1) gefahren und der Fluss P zu A von dem Dosierventil (2) unterstützt wird.

8. Verfahren nach einem der Ansprüche 1 bis 7,
**dadurch gekennzeichnet,**
**dass** die Ventilkanten (33', 37) der Ventilkolben (33, 35) des Dosierventils (2) für eine optimale Kontrolle bei kleinem Durchfluss von weniger als 25% bzw. 15% der grössten Leistung konisch geschliffen werden.

9. Verfahren nach Anspruch 1,
**dadurch gekennzeichnet,**
**dass** in der Phase Position der Einspritzsschnecke (43) halten und / oder Schneckenrückzug nur das Spritzventil (1) wirksam ist, wobei das Dosierventil (2) geschlossen im Überdeckungsbereich bleibt.

10. Verfahren nach einem der Ansprüche 1 bis 9,
**dadurch gekennzeichnet,**
**dass** zu der Kraft auf die Einspritzschnecke (43), verursacht durch den Granulateinzug sowie die Schneckendrehung, eine definierte Gegenkraft erzeugt wird durch einen kontrollierten Abfluss des Drucköles von der grossen Kammer (A) in die kleine Kammer (B), wobei gleichzeitig die Differenz der Kammervolumen kontrolliert in den Tank (27) abgelassen wird.

11. Verfahren nach einem der Ansprüche 1 bis 10,
**dadurch gekennzeichnet,**
**dass** die Phase der Druckregelung in der Nachdruckphase durch das Spritzventil (1) sichergestellt wird und dabei das Dosierventil (2) inaktiv bleibt.

12. Verfahren nach Anspruch 11,
**dadurch gekennzeichnet,**
**dass** die Regelung im Feinbereich des Druckes im Überdeckungsbereich des Spritzventils (1) durchgeführt wird.

13. Verfahren nach einem der Ansprüche 1 bis 12,
**dadurch gekennzeichnet,**
**dass** die Phasenübergänge positionsgeregelt werden.

14. Vorrichtung zum Steuern verschiedener Prozessphasen einer linear bewegten Achse der Einspritzschnecke (43) oder eines Schmelzekolbens einer Spritzgiessmaschine mit einem hydraulisch linear antreibbaren Kolben (45) mit einer Kolbenkammer (A) sowie einer Stangenkammer (B),
**dadurch gekennzeichnet,**
**dass** die Vorrichtung zum Steuern der verschiedenen Prozessphase, insbesondere der Einspritzschnecke (43), zwei einzeln sowie parallel steuerbare Proportionalventile, ein Spritzventil (1) sowie ein Dosierventil (2), aufweist, wobei während der Dosierphase mittels speziellem konstruktivem Aufbau mit dem Dosierventil (2) eine Verbindung der beiden Kammern (A) und (B) herstellbar ist.

15. Vorrichtung nach Anspruch 14,
**dadurch gekennzeichnet,**
**dass** mit einem asymmetrischen Schliff der Ventilkanten (33', 37) eine entsprechende Verbindung der beiden Kammern (A) und (B) für den Feinbereich kleiner 25% bzw. 15% der maximalen Leistung herstellbar ist.

16. Vorrichtung nach Anspruch 14 oder 15,
**dadurch gekennzeichnet,**
**dass** zwischen dem Spritzventil (1) sowie dem Dosierventil (2) Verbindungsleitungen (6) zu den Kammern A und B angeordnet sind, welche eine gleichzeitige Ölzufuhr und Ölabfuhr, sowohl der Kolbenkammer (A) wie auch der Stangenkammer (B), erlauben.

17. Vorrichtung nach einem der Ansprüche 14 bis 16,
**dadurch gekennzeichnet,**
**dass** sie eine gemeinsame Pumpe (22) und einen gemeinsamen Tank (27) aufweist, wobei der Ölfluss bzw. der Öldruck der einzelnen Prozessphasen mittels der Steuerung der zwei Proportionalventile (1, 2) sowie je einem Drucksensor (4, 5) in der Kolbenkammer (A) bzw. der Stangenkammer (B) sicherstellbar ist.

18. Vorrichtung nach einem der Ansprüche 14 bis 17,
**dadurch gekennzeichnet,**
**dass** sie Mittel aufweist zur Steuerung / Regelung der Prozessphasen in digitaler Steuer- / Regeltechnik.

19. Vorrichtung nach einem der Ansprüche 14 bis 18,
**dadurch gekennzeichnet,**
**dass** sie Steuermittel aufweist zur koordinierten und energieoptimalen Ansteuerung der zwei parallel angeordneten Proportionalventile (1, 2).

20. Vorrichtung nach einem der Ansprüche 14 bis 19,
**dadurch gekennzeichnet,**
**dass** die Kanten (33') des Kolbens (33) des Spritzventils (1) unterschiedlich zu den Kanten (37) des Kolbens (35) des Dosierventils (2) geschliffen sind bzw. dass die Kolben (33 bzw. 35) je unterschiedliche Konen aufweisen.

## Claims

1. A method for controlling different process phases of a linear motion axis of the injection screw (43) or of a melt piston in an injection moulding machine with a hydraulically linearly driven piston with piston chamber (A) and a rod chamber (B),
**characterized in that**
the driven piston (45) is controlled / regulated via two proportional valves, able to be connected in parallel and individually and able to be combined, an injection valve (1) and a metering valve (2), wherein during the metering phase a connection is produced of the two chambers (A) and (B) by means of a special structural configuration with the metering valve (2).

2. The method according to claim 1,
**characterized in that**
during the metering phase, a connection of the two chambers (A) and (B) is produced by means of a special structural configuration of the valve edge geometry, with the metering valve (2).

3. The method according to one of claims 1 or 2,
**characterized in that**
with increasing deflection of the metering valve (2) in the quadrant of the metering regulation, the oil flow is conveyed from both cylinder chambers (A + B) to the tank (27).

4. The method according to one of claims 1 to 3,
**characterized in that**
the drive of the injection screw (43) is produced in the metering direction by the degree of advancement of the injection screw (43) as a result of rotation, wherein the regulation takes place passively by throttling of the oil flow to the tank (27) and the injection valve (1) remains closed with its covering in this process.

5. The method according to one of claims 1 to 4,
**characterized in that**
to increase the output, at least of one process phase, the two proportional valves (1, 2) are connected in parallel.

6. The method according to claim 1,
**characterized in that**
during the injection phase, both valves (1 and 2) are activated simultaneously, wherein with a high output both proportional valves (1 and 2) are connected in parallel to double the output, and with a smaller output the two proportional valves (1 and 2) are activated differently.

7. The method according to claim 6,
**characterized in that**
the injection movement is made primarily with the injection valve (1) and the flow P to A is supported by the metering valve(2).

8. The method according to one of claims 1 to 7,
**characterized in that**
the valve edges (33', 37) of the valve pistons (33, 35) of the metering valve (2) are cut in a taper for an optimal control in the case of a small through-flow of less than 25% or respectively 15% of the greatest output.

9. The method according to claim 1,
**characterized in that**
in the phase of keeping position of the injection screw (43) and / or screw withdrawal, only the injection valve (1) is effective, with the metering valve (2) remaining closed in the covering region.

10. The method according to one of claims 1 to 9,
**characterized in that**
a defined counter force is produced to the force onto the injection screw (43), caused by the granulate feed and the screw rotation, by a controlled outflow of the pressure oil from the large chamber (A) into the small chamber (B), with the difference of the chamber volumes being discharged at the same time in a controlled manner into the tank (27).

11. The method according to one of claims 1 to 10,
**characterized in that**
the phase of pressure regulation in the after-pressure phase is ensured by the injection valve (1), and the metering valve (2) remains inactive here.

12. The method according to claim 11,
**characterized in that**
the regulation is carried out in the fine range of the pressure in the covering region of the injection valve (1).

13. The method according to one of claims 1 to 12,
**characterized in that**
the phase transitions are regulated with regard to position.

14. A device for controlling different process phases of a linear motion axis of the injection screw (43) or of a melt piston of an injection moulding machine with a hydraulically linearly drivable piston (45) with a piston chamber (A) and a rod chamber (B),
**characterized in that**
the device for controlling the different process phases, in particular of the injection screw (43), has two proportional valves which are able to be controlled individually and in parallel, an injection valve (1) and a metering valve (2), wherein during the metering phase a connection of the two chambers (A) and (B) is able to be produced by means of a special structural configuration with the metering valve (2).

15. The device according to claim 14,
**characterized in that**
with an asymmetrical cut of the valve edges (33', 37), a corresponding connection of the two chambers (A) and (B) is able to be produced for the fine range of less than 25% or respectively 15% of the maximum output.

16. The device according to claim 14 or 15,
**characterized in that**
connecting lines (6) to the chambers A and B are arranged between the injection valve (1) and the metering valve (2), which lines permit a simultaneous oil supply and oil removal, both with respect to the piston chamber (A) and also the rod chamber (B).

17. The device according to one of claims 14 to 16,
**characterized in that**
it has a shared pump (22) and a shared tank (27), with the oil flow or respectively the oil pressure of the individual process phases being able to be ensured by means of the control of the two proportional valves (1, 2) and in each case a pressure sensor (4, 5) in the piston chamber (A) or respectively the rod chamber (B).

18. The device according to one of claims 14 to 17,
**characterized in that**
it has means for controlling / regulating the process phases in digital control / regulation technology.

19. The device according to one of claims 14 to 18,
**characterized in that**
it has control means for the coordinated activation, optimal with regard to energy, of the two proportional valves (1, 2) which are arranged in parallel.

20. The device according to one of claims 14 to 19,
**characterized in that**
the edges (33') of the piston (33) of the injection valve (1) are cut differently to the edges (37) of the piston (35) of the metering valve (2) or respectively that the pistons (33 or respectively 35) in each case have different tapers.

## Revendications

1. Procédé de commande de différentes phases de procédé d'un axe déplacé linéairement de la vis d'injection (43) ou d'un piston à matière fondue d'une machine de moulage par injection comprenant un piston hydraulique à entraînement linéaire avec une chambre de piston (A) ainsi qu'une chambre de tige (B),
**caractérisé en ce que**
le piston entraîné (45) est commandé/régulé par deux soupapes proportionnelles pouvant être montées en parallèle ou individuellement et pouvant être combinées, une soupape d'injection (1) ainsi qu'une soupape de dosage (2), sachant que pendant la phase de dosage, une liaison des deux chambres (A) et (B) est créée via un montage de construction spécial avec la soupape de dosage (2).

2. Procédé selon la revendication 1,
**caractérisé en ce que**
pendant la phase de dosage, une liaison des deux chambres (A) et (B) est créée avec la soupape de dosage (2) via le montage de construction spécial de la géométrie des arêtes de soupape.

3. Procédé selon la revendication 1 ou 2,
**caractérisé en ce qu'**
avec la déviation croissante de la soupape de dosage (2) dans le quart de cercle de la régulation du dosage, le flux d'huile venant des deux chambres de cylindre (A + B) vers le réservoir (27) est dévié.

4. Procédé selon l'une des revendications 1 à 3,
**caractérisé en ce que**
l'entraînement de la vis d'injection (43) dans le dispositif de dosage est produit par le degré d'avancement de la vis d'injection (43) suite à la rotation, sachant que la régulation s'effectue de façon passive par l'étranglement du flux d'huile vers le réservoir (27) et que la soupape d'injection (1) reste fermée avec sa fermeture pendant cette procédure.

5. Procédé selon l'une des revendications 1 à 4,
**caractérisé en ce que**
pour augmenter la puissance, au moins d'une phase de procédé, les deux soupapes proportionnelles (1, 2) sont montées en parallèle.

6. Procédé selon la revendication 1,
**caractérisé en ce que**
pendant la phase d'injection, les deux soupapes (1 et 2) sont commandées en même temps, sachant qu'en cas de puissance supérieure, les deux soupapes proportionnelles (1 et 2) sont commandées en parallèle pour doubler la puissance et en cas de puissance inférieure, les deux soupapes proportionnelles (1 et 2) sont commandées différemment.

7. Procédé selon la revendication 6,
**caractérisé en ce que**
le mouvement d'injection est d'abord lancé avec la soupape d'injection (1) et le flux de P à A est pris en charge par la soupape de dosage (2).

8. Procédé selon l'une des revendications 1 à 7,
**caractérisé en ce que**
les arêtes de soupape (33', 37) des pistons de soupape (33, 35) de la soupape de dosage (2) sont affûtées de façon conique pour un contrôle optimal en cas de débit faible inférieur à 25 %, respectivement 15 % de la puissance la plus élevée.

9. Procédé selon la revendication 1,
**caractérisé en ce que**
dans la phase de maintien de la position de la vis d'injection (43) et/ou retrait de la vis, seule la soupape d'injection (1) est active, sachant que la soupape de dosage (2) reste fermée dans la zone de fermeture.

10. Procédé selon l'une des revendications 1 à 9,
**caractérisé en ce qu'**
une contre-force définie est produite par un rejet de l'huile de pression de la grande chambre (A) vers la petite chambre (B) par rapport à la force
sur la vis d'injection (43), provoquée par l'entrée de granulat et la rotation de la vis, sachant que parallèlement, la différence des volumes de chambre est évacuée de façon contrôlée dans le réservoir (27).

11. Procédé selon l'une des revendications 1 à 10,
**caractérisé en ce que**
la phase de régulation de la pression est assurée par la soupape d'injection (1) pendant la phase de maintien en pression et que la soupape de dosage (2) reste alors inactive.

12. Procédé selon la revendication 11,
**caractérisé en ce que**
la régulation est effectuée dans la plage fine de la pression dans la zone de fermeture de la soupape d'injection (1).

13. Procédé selon l'une des revendications 1 à 12,
**caractérisé en ce que**
la position des transitions de phase est régulée.

14. Dispositif de commande de différentes phases de procédé d'un axe déplacé linéairement de la vis d'injection (43) ou d'un piston à matière fondue d'une machine de moulage par injection comprenant un piston hydraulique (45) à entraînement linéaire avec une chambre de piston (A) ainsi qu'une chambre de tige (B),
**caractérisé en ce que**
le dispositif de commande des différentes phases de procédé, en particulier de la vis d'injection (43), présente deux soupapes proportionnelles pouvant être commandées individuellement ainsi qu'en parallèle, une soupape d'injection (1) ainsi qu'une soupape de dosage (2), sachant que pendant la phase de dosage, une liaison des deux chambres (A) et (B) peut être créée via un montage de construction spécial avec la soupape de dosage (2).

15. Dispositif selon la revendication 14,
**caractérisé en ce qu'**
une liaison correspondante des deux chambres (A) et (B) pour la plage fine inférieure à 25 %, respectivement 15 % de la puissance maximale peut être créée avec un affûtage asymétrique des arêtes de soupape (33', 37).

16. Dispositif selon la revendication 14 ou 15,
**caractérisé en ce que**
des lignes de liaison (6) vers les chambres A et B sont disposées entre la soupape d'injection (1) et la soupape de dosage (2), lesquelles permettent une amenée et une évacuation d'huile parallèles, tant vers/de la chambre de piston (A) que vers/de la chambre de tige (B).

17. Dispositif selon l'une des revendications 14 à 16,
**caractérisé en ce qu'**
il présente une pompe commune (22) et un réservoir commun (27), sachant que le flux d'huile, respectivement la pression de l'huile des différentes phases de procédé peut être assurée via la commande des deux soupapes proportionnelles (1, 2) ainsi que d'un capteur de pression (4, 5) respectif dans la chambre de piston (A) respectivement la chambre de tige (B).

18. Dispositif selon l'une des revendications 14 à 17,
**caractérisé en ce qu'**
il présente des moyens de commande/régulation des phases de procédé en technique de commande/régulation numérique.

19. Dispositif selon l'une des revendications 14 à 18,
**caractérisé en ce qu'**
il présente des moyens de commande pour la commande coordonnée et optimale en consommation d'énergie des deux soupapes proportionnelles (1, 2) montées en parallèle.

20. Dispositif selon l'une des revendications 14 à 19,
**caractérisé en ce que**
les arêtes (33') du piston (33) de la soupape d'injection (1) sont affûtées différemment des arêtes (37) du piston (35) de la soupape de dosage (2), respectivement que les pistons (33, respectivement 35) présentent des cônes différents.
